(19) 

Europäisches
Patentamt
European
Patent Office
Office européen
des brevets

(11) **EP 1 786 003 A1**

(12) **EUROPEAN PATENT APPLICATION**

(43) Date of publication:
**16.05.2007 Bulletin 2007/20**

(51) Int Cl.:
*H01C 7/00* (2006.01)          *G01R 31/02* (2006.01)
*G01L 1/20* (2006.01)          *B60R 21/01* (2006.01)

(21) Application number: **05110734.0**

(22) Date of filing: **15.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **IEE INTERNATIONAL ELECTRONICS & ENGINEERING S.A.**
**6468 Echternach (LU)**

(72) Inventors:
• **Flesch, Thomas**
  **66687 Morscholz (DE)**
• **Imamovic, Sanel**
  **4689 Differdange (LU)**
• **Schumacher, Alain**
  **54298 Igel (DE)**
• **Chabach, Driss**
  **9676 NOERTRANGE (LU)**

(74) Representative: **Beissel, Jean et al**
  **Office Ernest T. Freylinger S.A.,**
  **234, route d'Arlon,**
  **B.P. 48**
  **8001 Strassen (LU)**

(54) **Resistive connection for a circuit of a foil-type sensor**

(57)     The invention proposes a resistive connection of an electric circuit on a flexible foil-type sensor, the circuit comprising a first conductive line having an end forming a first electrode at the connection and a second conductive line having an end forming a second electrode at the connection. At the connection, the circuit comprises further a reference resistor in form of a resistive layer, which extends in a region between the first and second electrodes and which at least partially overlaps with the first and second electrodes so as to electrically connect the first conductive line with the second conductive line. According to an important aspect of the invention, the first electrode substantially surrounds the second electrode, and the resistive layer extends between the first and second electrodes generally along at least three radial directions, the at least three radial directions being angularly spaced such that a first direction and a second direction form an angle of less than 180° when seen in a clockwise sense and that the first direction and a third direction form an angle of more than 180° when seen in a clockwise sense.

Fig. 2

## Description

## Technical field

The present invention generally relates to foil-type sensors. In particular, the invention relates to a flexible foil-type pressure sensor, which is provided with an electrical circuit for monitoring the integrity of conductive lines connecting individual pressure sensing elements.

## Background Art

For safety applications, such as occupant detection in a vehicle, it is recommended to monitor the integrity of the connector that interconnect the individual pressure sensors in order to ascertain that an absence of a detection signal is not due to circuit interruption or a defective electric contact. Document LU 90116, for instance, discloses a seat occupancy detector having a plurality of individual pressure sensing elements arranged thereon in an n x m matrix of n row conductors and m column conductors. Each row conductor and each column conductor has a connection electrode connected to a control circuit and a free electrode. An additional column conductor is provided with a free electrode and a connection electrode connected to the control circuit. In order to detect circuit integrity, the free electrode of each row conductor is connected via a test or reference resistor to the additional column conductor. To test the integrity of a row conductor, one detects the electrical resistance between the connection electrode of the row conductor and the additional column conductor. Similarly, the device also comprises an additional row conductor, which is used to detect integrity of the column conductors.

In foil-type pressure sensing mats, the test or reference resistors are usually applied on the substrate as a thin layer of resistive material, e.g. carbon ink, which at least partially overlaps with the conductors the test or reference resistors connect. One has noted, however, that the resistance through these connections may significantly increase (sometimes by orders of magnitude) due to bending of the pressure sensing mat. As a result of such a resistance increase, integrity of the conductors may be not reliably detectable any more.

## Object of the invention

It is an object of the present invention to provide a more reliable resistive connection for an integrity detection circuit of a pressure sensing mat.

This object is achieved by a connection as claimed in claim 1.

## General Description of the Invention

In order to overcome the above-mentioned problem, the present invention proposes a resistive connection of an electric circuit on a flexible foil-type sensor, the circuit comprising a first conductive line having an end forming a first electrode at the connection and a second conductive line having an end forming a second electrode at the connection. At the connection, the circuit comprises further a reference resistor in form of a resistive layer, which extends in a region between the first and second electrodes and which at least partially overlaps with the first and second electrodes so as to electrically connect the first conductive line with the second conductive line. According to an important aspect of the invention, the first electrode substantially surrounds the second electrode, and the resistive layer extends between the first and second electrodes generally along at least three radial directions, the at least three radial directions being angularly spaced such that a first direction and a second direction form an angle of less than 180° when seen in a clockwise sense and that the first direction and a third direction form an angle of more than 180° when seen in a clockwise sense.

Due to the shape of the resistive layer and to the fact that at the resistive connection of first and second conductive lines, the first electrode extends essentially circumferentially around the second electrode in the plane of the sensor, the risk of an increased resistance due to bending of the flexible sensor finds itself substantially reduced. In fact, one has observed that bending of the sensor can result in cracks or fissures in the resistive layer of the reference resistor. These cracks have a preferred direction with respect to the bending that causes them. For instance, they may extend substantially perpendicular to the direction of the bending-related tensile or compressive stress field. As in the present resistive connection the resistive layer extends along a plurality of generally radial directions to connect the first and second electrodes, an increase in resistivity in a direction perpendicular to the direction of the cracks has a less significant impact on the total resistance of the connection. Indeed, the resistivity parallel to the cracks is little or not affected. The connection according to the present invention thus presents an electrical resistance that is less subject to dramatic variations caused by bending than connections, where the electrodes of the conductive lines are simply juxtaposed. In a circuit adapted for testing integrity, integrity of the circuit can be ultimately checked with a higher reliability.

It will be appreciated that the resistive layer may comprise a single, continuous patch or a plurality of patches connecting the electrodes generally along the at least three radial directions. The radial directions generally extend from the second electrode, e.g. from a central portion of the second electrode, radially to the substantially surrounding first electrode. It will be understood that in the present context the terms "generally along" are intended to encompass a case, where the resistive layer somewhat departs from a strictly radial course between the two electrodes. For instance, the resistive layer may have a plurality of components with an undulated shape, which roughly follow the radial directions. Alternatively, the resistive layer may have a plurality of vortex-shaped components. Preferably, however, the resistive layer covers a continuous angular section of strictly more than 180°.

According to a preferred aspect of the invention, it is proposed to equip a flexible foil-type pressure sensing mat with one or more connections of the type proposed by the invention. Such a pressure sensing mat e.g. comprises at least one pressure sensing element for detecting a pressure acting on the pressure sensing mat. A conductive feed line is provided for electrically connecting the at least one individual pressure sensing element to a control circuit. The foil-type pressure sensing mat further comprises a conductive check line, which is connectable to the control circuit for checking integrity of the feed line. The foil-type pressure sensing mat further comprises an end-of-line connection, which joins the feed line with the check line. The end-of-line connection is formed as a resistive connection according to the present invention. In the region of the connection, the feed line thus presents the first electrode, while the conductive line presents the second electrode, or vice-versa. The reference resistor between the conductive line and the check line allows testing of the integrity of the circuit.

According to a preferred embodiment of the resistive connection, the second electrode is essentially circular, e.g. disk- or ring-shaped, having a first radius (as outer radius) and the first electrode has an essentially disk-shaped recess centred on the second electrode, the recess having a second radius greater than the first radius. It shall be noted that, in the present context, the recess is defined by the absence of material of the first electrode in the region of the recess. As the conductive lines are carried on the same substrate, the surrounding first electrode does not enclose the surrounded second electrode totally, but is provided with an opening. Preferably, the first electrode has the shape of an arc segment of a ring. Most preferably, the resistive layer forming the reference resistor has the geometrical shape of a sector with an opening angle that approximately corresponds to the angle of the opening of the ring segment of the first electrode of the first conductive line. Advantageously, the openings of the sector and the opening of the ring segment are substantially aligned with each other.

As will be appreciated, the resistive layer of the reference resistor may comprise a resistive ink or resin containing e.g. graphite or carbon. Advantageously, the conductive lines comprise silver conductors or conductors of any other suitable material.

According to a most preferred aspect of the invention, the conductive lines have been applied as metal conductors (preferably silver conductors) at least partially on top of the resistive layer (e.g. the carbon ink) forming the reference resistor. As a matter of fact, this sequence of application has been found to be more robust than the reverse sequence, i.e. the case when the resistive layer is applied on top of the silver conductors. An explanation for this is reduced stress in the layers (silver conductors and resistive layer) during the curing process. As a result, the durability and the reliability of the electric circuit is improved.

## Brief Description of the Drawings

Further details and advantages of the present invention will be apparent from the following detailed description of a not limiting embodiment with reference to the attached drawings, wherein:

Fig. 1: is block diagram of an electric circuit of a pressure sensing mat;

Fig. 2: is a top view of the layout of a resistive connection according to the present invention.

## Description of a Preferred Embodiment

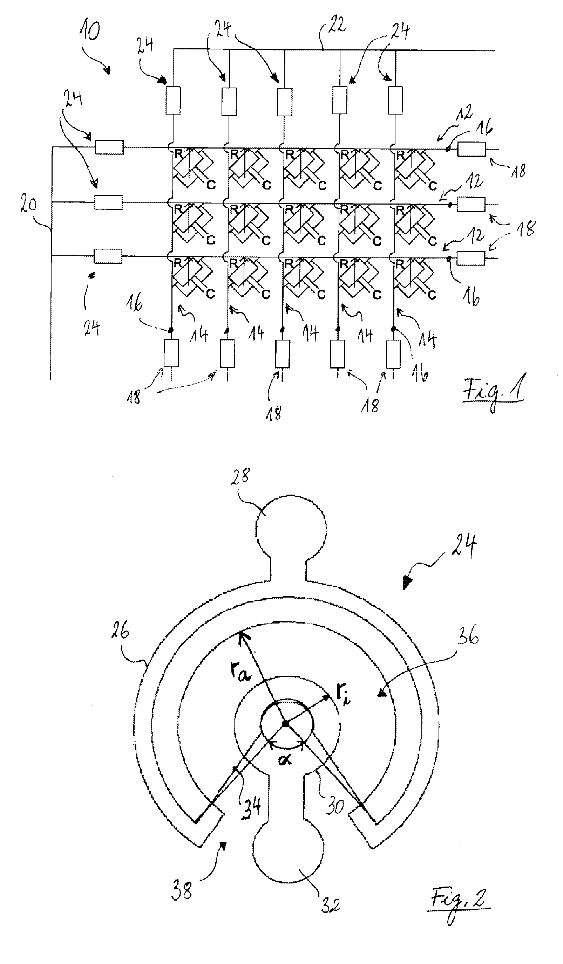

Fig. 1 generally shows an electric circuit 10 for a pressure sensing mat. The electric circuit 10 comprises a plurality of row conductors 12 and a plurality of column conductors 14. Individual pressure sensing elements are arranged where the row and column conductors 12, 14 cross each other. In Fig. 1 these pressure sensing elements are respectively shown as a variable resistor R in parallel with a capacitor C. The row and column conductors 12, 14 are each connected with a connection electrode 16 to a control circuit (not shown), via a resistor 18.

The pressure sensing mat usually comprises a first and a second carrier foil, e.g. PEN, PET, PI, PEEK, PES or PPS foils etc., which are kept at a distance one from the other by means of a spacer. In the regions of the individual pressure sensing elements the spacer has openings, so that the carrier foils can be brought together by a force or pressure acting against the resiliency of the carrier foils. When the pressure acting on the foils reaches a certain threshold, an electrical contact between the row conductor and the column conductor that cross each other in the region of the individual pressure sensing element is established. Depending on the type of the pressure sensing mat, each individual sensing element can be configured as a simple on-off switch or showing a pressure-dependent resistance with more than two states, e.g. a continuous change of resistance as a function of pressure.

As long as the pressure remains below the threshold, the row and column conductors are generally not in contact, so that virtually no current can flow through the row and column conductors.

In order to detect whether the row and column conductors are interrupted or not, each row conductor is connected to a first check line and each column conductor is connected to a second check line, via end-of-line connections 18 or 24. Each end-of-line connection 18 or 24 has a well-defined and finite resistance, which allows monitoring the integrity of the row and column conductors. To achieve this, the control circuit measures the electrical resistance between each row or column conductor and the first check line 20, respectively the second check line 22. Advantageously, the resistance of end-of-line connection 18 or 24 is not subject to important variations due to external circumstances, so that reliable detection of circuit integrity is ascertained in any situation.

Fig. 2 shows a top view schematic of a preferred embodiment of an end-of-line connection 24 implemented as a resistive connection according to the present invention. At the connection 18 or 24, the first electrode 26 of a first conductive line 28 and the second electrode 30 of a second conductive line 32 are located proximate to each other on the same substrate, e.g. the first or the second carrier foil of a pressure sensing mat. For instance, the first conductive line 28 may be a row conductor 12 or a column conductor 14 of the above described pressure sensing mat, whereas the second conductive line 32 would in this case be the first, respectively the second check line. As illustrated in Fig. 2, the first electrode 26 of the first conductive line 28 substantially surrounds the second electrode 30 of the second conductive line 32. It should be noted that any resistor on a foil-type sensor that is intended to have a defined constant resistance may be implemented as a connection according to the present invention.

A resistive layer 34 extends in the region between the first and second electrodes 26, 30 and partially overlaps with the first and second electrodes 26, 30 so as to electrically connect the first conductive line 28 with the second conductive line 32. The first electrode 26 presents a recess 36, which accommodates the second electrode 30, so that there is no direct physical contact between the first conductive line 28 and the second conductive line 32 in the region of the connection 24.

Advantageously, during the production process of the foil-type sensor, the resistive layer 34, e.g. consisting of carbon ink, is applied on the substrate first, while the conductive lines 28, 32 are applied after the resistive layer 34. The resistive layer 34 partially or totally overlaps with a conductive line 28, 32, i.e. the conductive line is arranged partially or totally on top of the resistive layer 34.

In the particular configuration shown in Fig. 2, the second electrode 30 is essentially ring-shaped, whereas the first electrode 26 has the shape of an arc segment of a ring. The first and second electrodes 26, 30 are disposed on the flexible substrate in a substantially concentric geometry. The second conductive line 32 enters or leaves the region of the connection 24 through an opening 38 of the ring segment of the first electrode. The resistive layer 34 has generally the geometrical shape of a sector of angle $2\Pi-\alpha$. The opening of the sector has the angular width $\alpha$ and is centred on the opening 38 of the angular ring segment of the first electrode and on the second conductive line 32. The opening of the ring segment forming the first electrode 26 of the first conductive line 28 has an angular width of approximately $\alpha$. Prefer-

able the angular width of the ring segment of the first electrode does not exceed 45 degrees, more preferably, it does not exceed 30 degrees. The resistance of the end-of-line connection 24 of Fig. 2 can be calculated by the formula:

$$R = \frac{\rho}{h} \cdot \frac{1}{2\pi - \alpha} \cdot \ln\left(\frac{r_a}{r_i}\right),$$

where $r_i$ is the radius of the second electrode and $r_a$ is the radius of the recess 36, i.e. the inner radius of the first electrode 26, $\alpha$ is the opening angle of the resistive layer 34, $\rho$ is a specific resistance of the resistive layer 34 and h is the thickness of the resistive layer 34. The ratio $\rho/h$ is also referred to as square resistance of the resistive layer 34.

The measured net resistance can be adjusted by varying for instance the radius $r_a$ by an amount $\Delta r_a$. The relative resistance variation $\Delta R/R$ is then given by:

$$\frac{\Delta R}{R} = \frac{1}{\ln\left(\frac{r_a}{r_i}\right)} \cdot \frac{\Delta r_a}{r_a}.$$

It will be appreciated that, if the sensor is bent in the region of the end-of-line connection 24, the resistance of the connection 24 will be less subject to high resistance increase than common connections.

A skilled person will be aware of other geometries, wherein the first electrode substantially surrounds the second electrode that can be used for the present invention. Such geometries may, for instance, involve oval or interdigitating electrodes. The geometry shown for illustration in Fig. 2 is, however, preferred as a very compact configuration.

## Claims

1. A resistive connection of an electric circuit on a flexible foil-type sensor, said circuit comprising
   a first conductive line having an end forming a first electrode at said connection;
   a second conductive line having an end forming a second electrode at said connection; and
   a reference resistor in form of a resistive layer, which extends between said first and second electrodes and which at least partially overlaps said first and second electrodes so as to electrically connect said first conductive line with said second conductive line;
   **characterised in that**
   said first electrode substantially surrounds said second electrode; and

said resistive layer extends between said first and second electrodes generally along at least three radial directions, said at least three radial directions being angularly spaced such that a first direction and a second direction form an angle of less than 180° when seen in a clockwise sense and that said first direction and a third direction form an angle of more than 180° when seen in a clockwise sense.

2. A resistive connection according to claim 1, wherein said resistive layer extends between said first and second electrodes covering an angular section of more than 180°.

3. A resistive connection according to claim 1 or 2, wherein the second electrode is essentially circular with a first radius and said first electrode has an essentially disk-shaped recess centred on said second electrode, said recess having a second radius greater than said first radius.

4. A resistive connection according to any one of claims 1 to 3, wherein said first electrode has the shape of an arc segment of a ring.

5. An resistive connection according to any one of claims 1 to 4, wherein said resistive layer comprises a resistive ink or resin.

6. A resistive connection according to any one of claims 1 to 5, wherein said resistive layer comprises graphite.

7. A resistive connection according to any one of claims 1 to 6, wherein said conductive lines comprise silver conductors.

8. A resistive connection according to claim 7, wherein said silver conductors are applied partially on top of said resistive layer.

9. A flexible foil-type pressure sensing mat comprising:

at least one individual pressure sensing element for detecting a pressure acting on said pressure sensing mat;
a conductive feed line for electrically connecting the at least one individual pressure sensing element to a control circuit;
a conductive check line connectable to said control circuit for checking integrity of the feed line; and
an end-of-line connection, which joins said conductive feed line and said conductive check line, said end of line connection being formed as resistive connection according to any one of the preceding claims.

_Fig. 1_

_Fig. 2_

**European Patent Office**

**EUROPEAN SEARCH REPORT**

Application Number

EP 05 11 0734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 758 256 A (EISLER PAUL) 7 August 1956 (1956-08-07) | 1,2,5,6 | H01C7/00 G01R31/02 G01L1/20 B60R21/01 |
| Y | * column 1, lines 19-30 * * column 3, lines 23-61; figure 2 * * column 2, lines 17-24 * | 9 | |
| X | US 5 994 997 A (BROWN ET AL) 30 November 1999 (1999-11-30) * column 3, line 61 - column 5, line 48; figures 1-6 * | 1,2,4,5 | |
| A | * abstract * | 3,6-8 | |
| X | US 3 649 944 A (RICHARD E. CADDOCK) 14 March 1972 (1972-03-14) | 1,2,4 | |
| A | * column 4, lines 1-34; figures 2,2a * | 3,5-8 | |
| Y | EP 0 895 091 A (I.E.E. INTERNATIONAL ELECTRONICS & ENGINEERING S.A.R.L) 3 February 1999 (1999-02-03) * the whole document * | 9 | |
| A | US 2002/125890 A1 (KIRIBAYASHI SHINICHI ET AL) 12 September 2002 (2002-09-12) * the whole document * | 9 | TECHNICAL FIELDS SEARCHED (IPC) H01C G01R G01L B60R |

The present search report has been drawn up for all claims

| Place of search | Date of completion of the search | Examiner |
|---|---|---|
| Munich | 21 February 2006 | Filipas, A |

**ANNEX TO THE EUROPEAN SEARCH REPORT
ON EUROPEAN PATENT APPLICATION NO.**

EP 05 11 0734

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2006

| Patent document cited in search report | | Publication date | Patent family member(s) | | Publication date |
|---|---|---|---|---|---|
| US 2758256 | A | 07-08-1956 | GB | 732437 A | 22-06-1955 |
| US 5994997 | A | 30-11-1999 | US | 6130601 A | 10-10-2000 |
| US 3649944 | A | 14-03-1972 | NONE | | |
| EP 0895091 | A | 03-02-1999 | LU | 90116 A2 | 01-02-1999 |
| US 2002125890 | A1 | 12-09-2002 | DE | 10203148 A1 | 19-09-2002 |
| | | | FR | 2821932 A1 | 13-09-2002 |
| | | | JP | 2002267554 A | 18-09-2002 |

EPO FORM P0459

For more details about this annex : see Official Journal of the European Patent Office, No. 12/82

**EP 1 786 003 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- LU 90116